Europäisches Patentamt

European Patent Office

Office européen des brevets

(19)

(11) Veröffentlichungsnummer: **0 354 550**

**A2**

(12) # EUROPÄISCHE PATENTANMELDUNG

(21) Anmeldenummer: **89114725.8**

(22) Anmeldetag: **08.08.89**

(51) Int. Cl.⁴: **G01N 27/90**

(30) Priorität: **11.08.88 DE 3827229**

(43) Veröffentlichungstag der Anmeldung:
**14.02.90 Patentblatt 90/07**

(84) Benannte Vertragsstaaten:
**AT BE CH DE ES FR GB IT LI NL SE**

(71) Anmelder:
**INDUSTRIEANLAGEN-BETRIEBSGESELLSCH-
AFT M.B.H.
Einsteinstrasse 20
D-8012 Ottobrunn(DE)**

(72) Erfinder: **Ziegltrum, Werner
Holzacker 21
D-8201 Raubling(DE)**

(74) Vertreter: **Bohnenberger, Johannes, Dr. et al
Meissner, Bolte & Partner
Widenmayerstrasse 48 Postfach 86 06 24
D-8000 München 86(DE)**

(54) Verfahren und Vorrichtung zur zerstörungsfreien Prüfung von Halbzeugen oder Bauteilen.

(57) Es wird ein Verfahren zur zerstörungsfreien Prüfung von Halbzeugen oder Bauteilen aus einem Material aufgezeigt, das faserverstärkte Kunststoffe umfaßt, deren Fasern aus Kohlenstoff oder dergleichen elektrisch leitenden Stoffen bestehen. Die Überprüfung soll insbesondere auf Fertigungsfehler oder Betriebsschäden, wie Delaminationen, Risse, Brüche, Ablösungen oder dergleichen gerichtet sein. Hierbei werden elektrische und magnetische Eigenschaften einer Wirbelstrommeßsonde und eine Prüffrequenz zum Betreiben der Wirbelstrommeßsonde auf das Material abgestimmt. Die Wirbelstrommeßsonde wird über das Halbzeug oder Bauteil entlang dessen Oberfläche bewegt bzw. auf verschiedene Punkte der Oberfläche aufgesetzt. Ausgangssignale einer Signalauswerteinrichtung der Wirbelstrommeßsonde werden hierbei überwacht. Ein Fertigungsfehler bzw. ein Betriebsschaden wird dann angezeigt, wenn die Ausgangssignale einen von einem Durchschnittswert bzw. von einem erwarteten Wert abweichenden Wert aufweisen.

## Verfahren und Vorrichtung zur zerstörungsfreien Prüfung von Halbzeugen oder Bauteilen

Die Erfindung betrifft ein Verfahren zur zerstörungsfreien Prüfung von Halbzeugen oder Bauteilen aus einem Material, das faserverstärkte Kunststoffe umfaßt, deren Fasern aus Kohlenstoff oder dergleichen elektrisch leitenden Stoffen bestehen. Insbesondere sollen hierbei Fertigungsfehler oder Betriebsschäden wie Delaminationen, Risse, Brüche, Ablösungen oder dergleichen untersucht werden. Hierbei kann es sich auch um Sandwich- und Integralkonstruktionen handeln.

Faserverstärkte Kunststoffe haben gegenüber metallischen Werkstoffen den Vorteil hoher mechanischer Festigkeit bei geringem Gewicht. Deshalb finden sie zunehmend Verwendung für eine Vielzahl von Gebrauchsgütern, insbesondere in der Verkehrstechnik und hier wiederum besonders in der Flugzeug-und in der Raumfahrttechnik. Besonders hohe Festigkeiten weisen faserverstärkte Kunststoffe auf, bei denen die Fasern von Kohlenstoffasern gebildet werden.

In Anbetracht des vorgenannten Anwendungsgebietes, bei wel-chem es auf höchste Zuverlässigkeit der Bauteile ankommt, besteht ein großer Bedarf an einem Verfahren, mit dem verdeckte Fertigungsfehler, sowie äußerlich nicht erkennbare Betriebsschäden in Bauteilen aus derartigen faserverstärkten Kunststoffen wirtschaftlich und vor allem sehr zuverlässig aufgespürt und eindeutig lokalisiert werden können Derartige Fertigungsfehler können z.B. Faseranhäufungen oder Harznester sein, also Unregelmäßigkeiten in dem ansonsten möglichst homogenen Verbund aus Kohlenstoffasern und Kunstharz. Als Betriebsschäden treten beispielsweise verdeckt im Material liegende Delaminationen, Risse, Brüche oder Absplitterungen auf. Insbesondere bei Sandwich-Konstruktionen oder Hybridstrukturen, also bei Bauteilen, in welchen Teile oder Schichten aus faserverstärktem Kunststoff mit Teilen oder Schichten aus anderen Materialien verbunden sind, können Ablösungen insbesondere an Klebestellen auftreten, die äußerlich nicht erkennbar sind.

Bisher wurden derartige Prüfungen von Fertigungsfehlern oder Betriebsschäden von faserverstärkten Kunststoffen durch Ultraschall- oder Röntgenverfahren durchgeführt. Die Überprüfung mit Ultraschall bringt jedoch einen apparativ und zeitlich hohen Aufwand mit sich, wobei das Verfahren hochqualifiziertes Prüfpersonal voraussetzt. Trotz des hohen Aufwandes sind die erzielbaren Ergebnisse beschränkt, da die Eindringtiefe im Echoverfahren begrenzt ist und eine Schadensauffindung in verdeckten, akustisch abgekoppelten tieferliegenden Werkstoffschichten nicht möglich ist. Der Aufwand beim Prüfen ist u.a. deshalb besonders hoch, weil die akustische Ankoppelung der Meßaufnehmer schwierig ist.

Die Überprüfung von Halbzeugen und Bauteilen mittels Röntgenstrahlen ermöglicht lediglich begrenzte Aussagen und ist darüber hinaus nicht ungefährlich für das Bedienungspersonal. Um Strahlenschäden vorzubeugen, muß darum ein ganz erheblicher Schutzaufwand betrieben werden.

Aufgabe der Erfindung ist es, ein Verfahren aufzuzeigen, das die oben genannten Nachteile vermeidet.

Insbesondere ist es Aufgabe der Erfindung, Verfahren und Vorrichtung zur zerstörungsfreien Prüfung von Halbzeugen oder Bauteilen aus faserverstärkten Kunststoffen aufzuzeigen, bei dem auch Fehler und Schäden in tieferliegenden Schichten von Verbundwerkstoffen, insbesondere von Mehrschichtkonstruktionen sicher gefunden werden können.

Weiterhin ist es Aufgabe der Erfindung, Verfahren und Vorrichtung aufzuzeigen, mit denen auch größere Untersuchungsobjekte, z.B. Flugzeugtragflächen oder dergleichen, bereichsweise (lokal) schnell und einfach manuell überprüft werden können. Weiterhin soll auch eine großflächige, mehr oder weniger automatisierte Prüfung möglich sein. Insbesondere soll eine Erstellung von Soll-Ist-Vergleichen vornehmbar sein, so daß z.B. ein Vergleich eines fehlerfreien Musterteils mit Serienteilen im Rahmen der Qualitätssicherung bei der Herstellung von Bauteilen möglich ist.

Schließlich sollen ein Verfahren und eine Vorrichtung aufgezeigt werden, mittels derer die Eigenschaften von Neuteilen, z.B. von Rotorblättern von Hubschraubern, mit den Eigenschaften derselben Teile verglichen werden können, wenn diese eine bestimmte Betriebszeit hinter sich haben, um so Veränderungen bzw. aufgetretene Schäden feststellen zu können. Die Ergebnisse sollen schnell und zuverlässig erzielbar sein.

Mit der Erfindung wird ein Verfahren zur zerstörungsfreien Prüfung von Halbzeugen oder Bauteilen aus einem Material aufgezeigt, das faserverstärkte Kunststoffe umfaßt, deren Fasern aus Kohlenstoff oder dergleichen elektrisch leitenden Stoffen bestehen, auf Fertigungsfehler oder Betriebsschäden, wie Delaminationen, Risse, Brüche, Ablösungen oder dergleichen, wobei elektrische und magnetische Eigenschaften einer Wirbelstrommeßsonde und eine Prüffrequenz zum Betreiben der Wirbelstrommeßsonde auf das Material abgestimmt werden, die Wirbelstrommeßsonde über das Halbzeug oder Bauteil entlang dessen Oberfläche bewegt wird (oder umgekehrt), bzw. mittels der Wirbelstrommeßsonde an verschiedenen Stellen des Halbzeugs oder Bauteils gemessen wird, wobei weiterhin die Ausgangssignale einer Signalauswerteinrichtung der Wirbelstrommeßsonde überwacht werden und dann ein Fertigungsfehler oder Betriebsschaden angezeigt wird, wenn die Ausgangssignale einen von einem Durchschnittswert abweichenden Wert aufweisen.

Die erfindungsgemäße Vorrichtung umfaßt eine Wirbelstrommeßsonde, deren elektrische und magnetische Eigenschaften und deren Prüffrequenz auf das Material abgestimmt sind, wobei die Wirbelstrommeßsonde derart ausgebildet ist, daß sie relativ zu oder entlang einer Oberfläche des Halbzeugs oder Bauteils bewegbar ist (oder umgekehrt), und die eine Signalauswerteinrichtung zum Auswerten der Ausgangssignale der Wirbelstrommeßsonde aufweist, die derart ausgebildet ist, daß dann, wenn während der Relativbewegung zwischen Wirbelstrommeßsonde und Halbzeug oder Bauteil bzw. wenn zwischen den einzelnen (statischen) Messungen ein Ausgangssignal der Signalauswerteinrichtung von einem Durchschnittswert abweicht, ein Fertigungsfehler oder Betriebsschaden angezeigt wird.

Selbstverständlich ist es auch möglich, die Meßwerte, die bei einem kontinuierlichen Verschieben der Sonde oder bei statischen Messungen mehrerer Punkte nacheinander gewonnen werden, aufzuzeichnen bzw. anzuzeigen und aus der Aufzeichnung bzw. der Anzeige auf das Vorliegen von Fehlern zu schließen.

Auswertgeräte für Wirbelstrommeßsonden zum Prüfen metalli- . . . scher Bauteile sind im Handel erhältlich. Es sei hier bei spielsweise auf das Gerät ELOTEST B2 der Firma Elektro-Spezial-Rohmann-GmbH, BRD, verwiesen.

Es ist zwar bekannt, daß Delaminationen in Bohrungen von kohlenstoffaserverstärkten Kunststofflaminaten mittels Wirbelstrommeßsonden überprüfbar sind (Kunststoffe 75 (1985) 6; Seite 346-349), jedoch ist unter Verwendung der dort offenbarten Erkenntnisse keine wirtschaftlich sinnvolle und genaue Überprüfung von Bauteilen möglich, wie sie oben beschrieben wurde. Insbesondere wird in der Druckschrift ausgeführt, bei einer Überprüfung der Laminate senkrecht zum Laminat seien Frequenzen von $10^7$ bis $10^9$ Hz erforderlich, wobei Meßsonden und Auswertgeräte für derartig hohe Frequenzbereiche nicht zur Verfügung stehen.

Überraschenderweise hat es sich gezeigt, daß Prüffrequenzen im Bereich zwischen 10 kHz und 40 kHz, insbesondere zwischen 15 kHz und 25 kHz und am besten zwischen 18 kHz und 20 kHz zu sehr gut verwendbaren Meßergebnissen führen. Eine mit diesen Prüffrequenzen betreibbare Wirbelstrommeßsonde weist einen ferromagnetischen Kern auf, auf welchen eine Spule gewickelt ist. Der ferromagnetische Kern ist vorzugsweise als Schalenkern mit einer offenen Seite ausgebildet und sollte vorzugsweise aus einem Ferritmaterial bestehen. Ein geeignetes Ferritmaterial wird unter der Bezeichnung T38 in der BRD im Handel vertrieben.

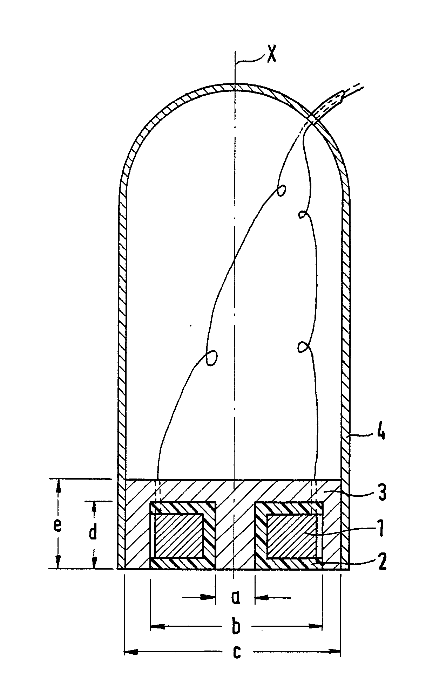

In der beiliegenden Zeichnung ist eine Prüfsonde schematisiert im Längsschnitt dargestellt, die sehr gute Meßergebnisse bei einer Prüffrequenz um ca. 18 kHz bis 20 kHz liefert. Diese Prüfsonde umfaßt einen Schalenkern 3 nit einem um eine Achse X radialsymmetrischen Querschnitt. In den Schalenkern 3 ist eine Spule 1 eingesetzt, die eiren Spulenträger 2 aus Kunststoff aufweist. Der Schalenkern 3 mit der darin befindlichen Spule 1 auf dem Spulenträger 2 ist in eine Schutzhülse 4 so eingesetzt, daß die offene Seite des Schalenkerns eine Außen-Abschlußfläche der Schutzhülse 4 bildet. Die so entstehende Anordnung kann an der Schutzhülse 4 ergriffen oder in ein Führungswerkzeug eingespannt werden. Als geeignete Dimensionierungen haben sich ein Schalenkern mit einem Außendurchmesser a des inneren kerns von 3,0 mm, einem Innendurchmesser b der äußeren Schale von 15,5 mm, einem Außendurchmesser c des Schalenkerns von 18 mm, einer Tiefe d des Schalenkern-Innenraums von 3,5 mm sowie einer Höhe e des Schalenkerns von 4,0 mm erwiesen. Die verwendete Spule ist aus einer Hf-Litze von 20 x 0,05 mm Kupfermaterial mit 61 Windungen gewickelt.

Wie sich aus der obigen Beschreibung bzw. der beiliegenden Zeichnung ergibt, ist eine derartige Sonde sehr leicht mobil einsetzbar, insbesondere bei Prüfungen vor Ort ohne Ausbau des Prüfteils.

Wie aus obigem hervorgeht, liegt ein wesentlicher Punkt der Erfindung in der besonderen Kombination aus Prüffrequenz und verwendeter Sonde mit ihrem speziellen Aufbau.

Die Erfindung ist nicht auf das gezeigte Ausführungsbeispiel beschränkt, vielmehr dient dieses lediglich zum leichteren Verständnis. Andere, unter die vorliegende Erfindung fallende Ausführungsformen sind denkbar.

## Ansprüche

1. Verfahren zur zerstörungsfreien Prüfung von Halbzeugen oder Bauteilen aus einem Material, das faserverstärkte Kunststoffe umfaßt, deren Fasern aus Kohlenstoff oder dergleichen elektrisch leitenden Stoffen bestehen, auf Fertigungsfehler oder Betriebsschäden, wie Delaminationen, Risse, Brüche, Ablösungen oder dergleichen,
wobei elektrische und magnetische Eigenschaften einer Wirbelstrommeßsonde und eine Prüffrequenz zum Betreiben der Wirbelstrommeßsonde auf das Material abgestimmt werden,

die Wirbelstrommeßsonde über das Halbzeug oder Bauteil entlang dessen Oberfläche bewegt wird (oder umgekehrt), Ausgangssignale einer Signalauswerteinrichtung der Wirbelstrommeßsonde überwacht werden, und

dann ein Fertigungsfehler oder Betriebsschaden angezeigt wird, wenn die Ausgangssignale einen von einem Durchschnittswert abweichenden Wert aufweisen.

2. Verfahren nach Anspruch 1,
**dadurch gekennzeichnet,**
daß eine Prüffrequenz im Bereich zwischen 10 kHz und 40 kHz verwendet wird.

3. Verfahren nach einem der vorhergehenden Ansprüche,
**dadurch gekennzeichnet,**
daß eine Prüffrequenz im Bereich zwischen 15 kHz und 25 kHz verwendet wird.

4. Verfahren nach einem der vorhergehenden Ansprüche,
**dadurch gekennzeichnet,**
daß eine Prüffrequenz zwischen 18 kHz und 20 kHz verwendet wird.

5. Vorrichtung zur zerstörungsfreien Prüfung von Halbzeugen oder Bauteilen aus einem Material, das faserverstärkte Kunststoffe umfaßt, deren Fasern aus Kohlenstoff oder dergleichen elektrisch leitenden Stoffen bestehen, auf Fertigungsfehler oder Betriebsschäden, wie Delaminationen, Rissen, Brüchen, Ablösungen oder dergleichen,
mit einer Wirbelstrommeßsonde, deren elektrische und magnetische Eigenschaften und deren Prüffrequenz auf das Material abgestimmt sind,
wobei die Wirbelstrommeßsonde derart ausgebildet ist, daß sie relativ zu und entlang einer Oberfläche des Halbzeugs oder Bauteils bewegbar ist (oder umgekehrt), und mit einer Signalauswerteinrichtung zum Auswerten der Ausgangssignale der Wirbelstrommeßsonde, die derart ausgebildet ist, daß dann, wenn während der Relativbewegung zwischen Wirbelstrommeßsonde und Halbzeug oder Bauteil ein Ausgangssignal der Signalauswerteinrichtung von einem Durchschnittswert abweicht, ein Fertigungsfehler oder Betriebsschaden angezeigt wird.

6. Vorrichtung nach Anspruch 5,
**dadurch gekennzeichnet,**
daß die Wirbelstrommeßsonde mit einer Prüffrequenz im Bereich zwischen 10 kHz und 40 kHz betreibbar ist.

7. Vorrichtung nach einem der Ansprüche 5 oder 6,
**dadurch gekennzeichnet,**
daß die Wirbelstrommeßsonde mit einer Prüffrequenz im Bereich zwischen 15 kHz und 25 kHz betreibbar ist.

8. Vorrichtung nach einem der Ansprüche 5 bis 7,
**dadurch gekennzeichnet,**
daß die Wirbelstrommeßsonde mit einer Prüffrequenz im Bereich zwischen 18 kHz und 20 kHz betreibbar ist.

9. Vorrichtung nach einem der Ansprüche 5 bis 8,
**dadurch gekennzeichnet,**
daß die Wirbelstrommeßsonde eine auf einen ferromagnetischen Kern gewickelte Spule aufweist.

10. Vorrichtung nach Anspruch 9,
**dadurch gekennzeichnet,**
daß der ferromagnetische Kern als Schalenkern mit einer offenen Seite ausgebildet ist.

11. Vorrichtung nach einem der Ansprüche 9 oder 10,
**dadurch gekennzeichnet,**
daß der Kern aus einem Ferritmaterial besteht.

12. Vorrichtung nach Anspruch 11,
**dadurch gekennzeichnet,**
daß der Kern aus Ferrit T38 besteht.

13. Vorrichtung nach einem der Ansprüche 10 bis 12,
**dadurch gekennzeichnet,**
daß der Schalenkern einen Innendurchmesser (a) von 2,5 bis 3 mm, eine lichte Weite (b) von 15 bis 16 mm, einen Außendurchmesser (c) von 17 bis 19 mm und eine Tiefe (e) von 3 bis 5 mm aufweist, wobei die Spule zwischen 50 und 70 Windungen aufweist.